# EUROPEAN PATENT APPLICATION

(11) **EP 1 574 312 A2**
(43) Date of publication of application: **14.09.2005**
(21) Application number: 05004434.6
(22) Date of filing: 01.03.2005
(51) Int. Cl.: B29C 44/12

(54) **Joint structure for partial foaming part of instrument panel**

(30) Priority: 04.03.2004 KR 2004014686; 26.01.2005 KR 2005006926
(71) Applicant: Duckyang Ind. Co., Ltd., Ulsan (KR)
(72) Inventor: Lee, Jong Gil, Buk-Gu, Ulsan (KR); Ju, Sang Ryool, Kyeongnam (KR); Nelias, François, 59170 Croix (FR)
(74) Representative: Adam, Holger

(57) **Abstract**

Disclosed herein is a joint structure of a core layer (2) and a skin layer (3) for manufacturing a partial foaming part having a polyurethane foam layer (4) formed between the core layer (2) and the skin layer (3). A recess (21) is formed on the core layer corresponding to the joint of the core layer (2) and the skin layer (3). The recess (21) includes at the inside thereof a guiding wall (22) for the skin layer (3) and a pressing wall (23). A bent portion (31) and a resilient supporting portion (32) are formed in the end portion of the skin layer to be inserted inside the recess (21). The bent portion (31) is bent upwardly so as to contact the guiding wall (22). The resilient supporting portion (32) is resiliently supported underneath the pressing wall (23).

## Description

### BACKGROUND OF THE INVENTION

### Field of the Invention

The present invention relates to a joint structure of a partial foaming part of an instrument panel for integrally combining a core layer and a skin layer by forming a polyurethane foam layer between the core layer and the skin layer. More specifically, the invention relates to such a joint structure, in which, when a foaming die is closed after the core layer and the skin layer are mounted on the die, the skin layer can be easily inserted into a recess formed in the core layer, and the inserted end portion of the skin layer can be resiliently supported inside the recess, or its end portion can be guided on a narrow groove of the recess, and hence, the joining of a core layer and a skin layer is formed of a structure to the extent that leakage of the foaming liquid can be completely blocked, while easily performing the foaming process of polyurethane using a foaming die, and thus the post-treating work due to leakage of the foaming liquid can be minimized, thereby significantly improving the productivity of the partial foaming part and the quality of produced partial foaming part.

### Background of the Related Art

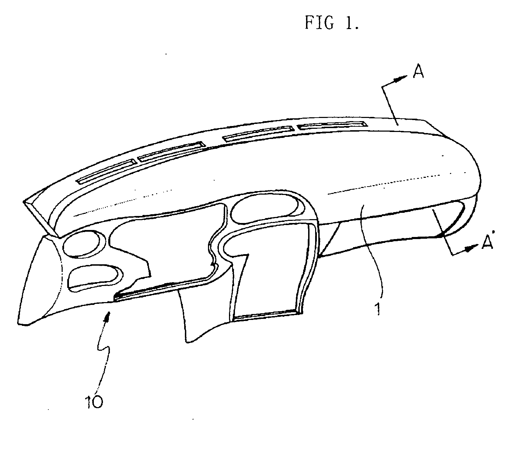

In general, as shown in FIG. 1, an instrument panel 10 is installed in front of the driver's seat and the passenger's seat of a vehicle and includes an instrument board informing the speed of the vehicle, the fuel balance, and various warnings. The instrument panel 10 also includes various spaces formed therein for installing an audio system or storing various stuffs, and at the same time functions to protect the passengers by absorbing part of the impact generated during collision. Depending on the manufacturing method thereof, it is categorized into a soft panel and a hard panel.

In case of the soft panel mode, the instrument panel 10 is composed of a triple-layered structure, i.e., a core layer, a polyurethane foam layer and a skin layer and advantageously provides a luxurious image and a smooth sense of touch. However, since the instrument panel 10 is formed, in its entirety, of a polyurethane foam layer, its own weight and manufacturing cost are increased disadvantageously. In case of the hard panel mode, the instrument panel 10 itself is fabricated through an injection molding process using a single material, thus reducing its weight and production cost. However, it lacks the luxurious image or the smooth touch as in the above soft panel mode, and thus has been applied to inexpensive compact cars.

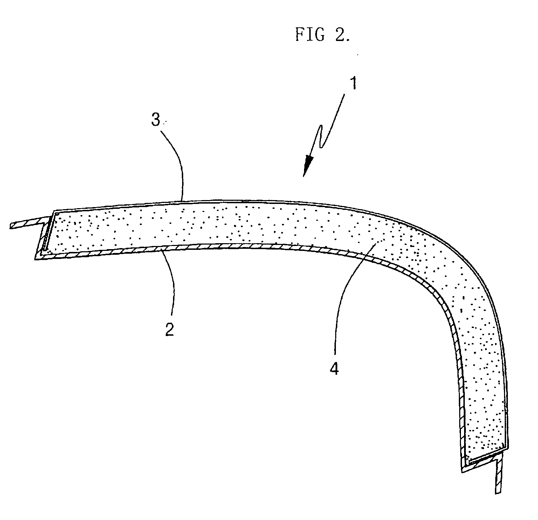

FIG. 2 depicts an instrument panel 10 proposed in order to complement the problems associated both of the soft panel and the hard panel, and also to take their advantages. In the instrument panel of FIG. 2, the end portion of a core layer 2 and the end portion of a skin layer 3 are bent at a certain angle as to face each other. Then, the core layer 2 and the skin layer 3 are assembled such that the bent portion of the skin layer 3 can be contacted inwards of the recess of the core layer 2. At the assembled state, a polyurethane foam layer 4 is foamed thereinside to thereby primarily produce a partial foaming part 1, in which the core layer 2 and the skin layer 3 are integrally formed. Thereafter, the partial foaming part 1 is fabricated in a soft panel only for the portion that requires a luxurious image or a smooth touch, and in a hard panel for other portions, to thereby complete an instrument panel 10.

However, the above conventional partial foaming part 1 embraces a problem in that, when polyurethane is foamed, the foaming liquid is easily leaked through the joint of the core layer 2 and the skin layer 3. Accordingly, since the skin layer 3 is formed unnecessarily wider, unnecessary post-treatments must be carried out. For example, a cutting process is needed for removing a polyurethane foam cured along with the skin layer 3, which is leaked during the partial foaming, and a polishing process is required for finally finishing the cut surface. Therefore, its manufacturing cost is increased, due to an increased loss in the foaming liquid, the skin layer 3 material and an increase in the number of the whole manufacturing processes.

As an attempt to address the above problem, a leakage prevention groove or hump is formed in the core layer 2 at the joining portion where the core layer 2 and the skin layer 3 are in contact with each other, thereby blocking leakage of the polyurethane foaming liquid. This structure for leakage prevention has a simple structure where the core layer 2 and the skin layer 3 are engaged in a contact form, and thus does not become a complete solution for preventing the leakage of polyurethane foaming liquid. As such, this approach does not make a great contribution to an improvement in the productivity of the partial foaming part 1 and the quality thereof, and an reduction in the manufacturing cost of the instrument panel 10.

### SUMMARY OF THE INVENTION

Therefore, the present invention has been made in view of the above problems occurring in the prior art, and it is an object of the present invention to provide a joint structure of a partial foaming part of an instrument panel, in which the joining of a core layer and a skin layer is formed of a structure to the extent that leakage of the foaming liquid can be completely blocked, while easily performing the foaming process of polyurethane using a foaming die, and thus the post-treating work due to leakage of the foaming liquid can be minimized, thereby significantly improving the productivity of the partial foaming part and the quality of produced partial foaming part.

To accomplish the above object, according one aspect of the present invention, a joint structure of a core layer and a skin layer is provided to manufacture a partial foaming part having a polyurethane foam layer formed between the core layer and the skin layer. A recess is formed on the core layer corresponding to the joint of the core layer and the skin layer. The recess includes at the inside thereof a guiding wall for the skin layer and a pressing wall. A bent portion and a resilient supporting portion are formed in the end portion of the skin layer to be inserted inside the recess. The bent portion is bent upwardly so as to contact with the guiding wall, and the resilient supporting portion is resiliently supported by the pressing wall.
According to another aspect of the invention, there is also provided a joint structure of a core layer and a skin layer for manufacturing a partial foaming part having a polyurethane foam layer formed between the core layer and the skin layer. A recess is formed on the core layer corresponding to the joint of the core layer and the skin layer. The recess includes at the inside thereof a side wall for the skin layer and an inserting groove. A bent portion and an inserting end portion formed at the leading end of the bent portion are formed in the end portion of the skin layer to be inserted inside the recess. The bent portion is bent upwardly so as to be inserted into the side wall. The side wall is formed in such a manner that the width D of its entrance is larger than the variable width θ of the bent portion of the skin layer and then gradually becomes narrower towards the inserting groove.

### BRIEF DESCRIPTION OF THE DRAWINGS

The above and other objects, features and advantages of the present invention will be apparent from the following detailed description of the preferred embodiments of the invention in conjunction with the accompanying drawings, in which:

FIG. 1 is a perspective view of a common instrument panel;

FIG. 2 is a cross-section taken along the line A-A' in FIG. 1 and showing a partial foaming part of an instrument panel;

FIGS. 3 and 4 illustrate a joint structure for a partial foaming part of an instrument panel according to a first embodiment of the invention;

FIGS. 5 and 9 illustrate a joint structure for a partial foaming part of an instrument panel according to a second to fifth embodiment of the invention;

FIGS. 10 and 11 illustrate a joint structure for a partial foaming part of an instrument panel according to a sixth embodiment of the invention;

FIGS. 12 and 13 illustrate a joint structure for a partial foaming part of an instrument panel according to a seventh embodiment of the invention;

FIGS. 14 and 15 illustrate a joint structure for a partial foaming part of an instrument panel according to a eighth and ninth embodiment of the invention.

### DETAILED DESCRIPTION OF ONE PREFERRED EMBODIMENT

Reference will now be made in detail to the preferred embodiment of the present invention with reference to the attached drawings.

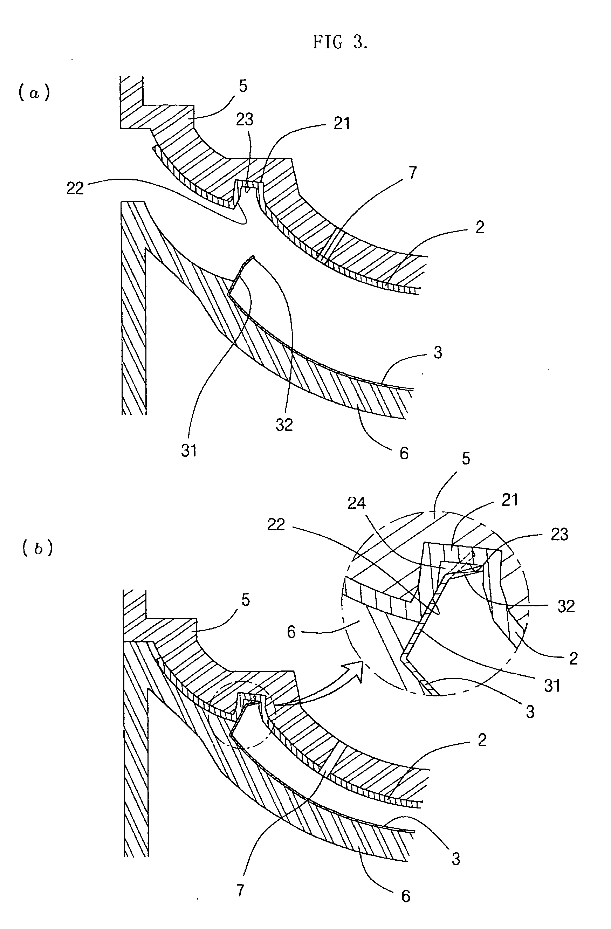

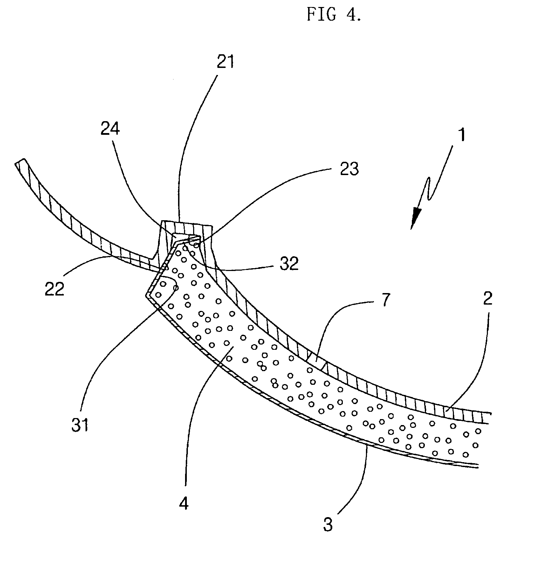

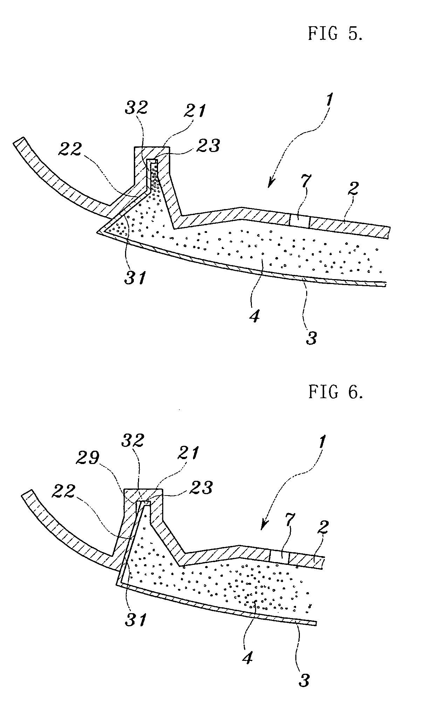

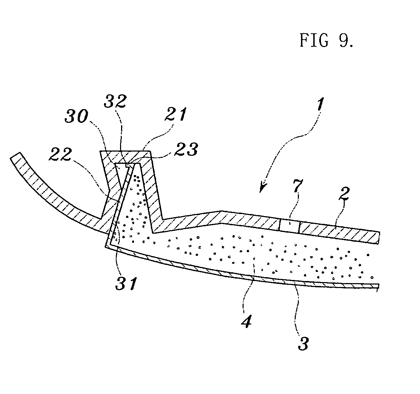

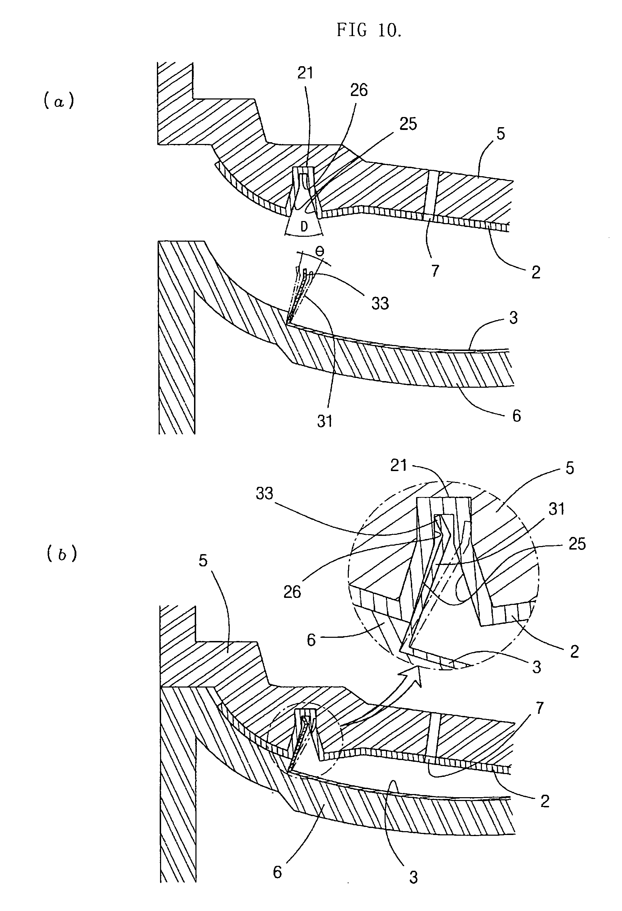

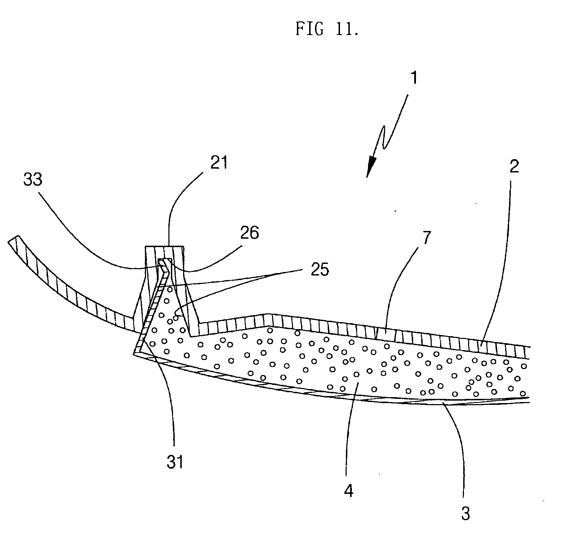

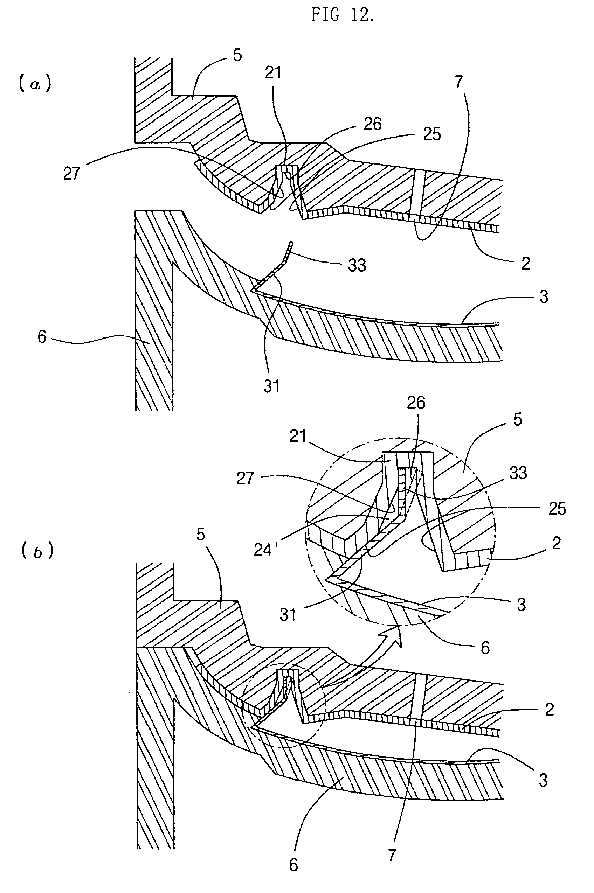

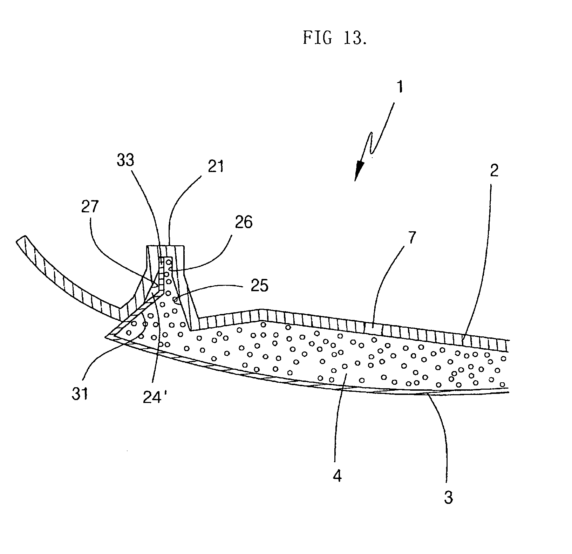

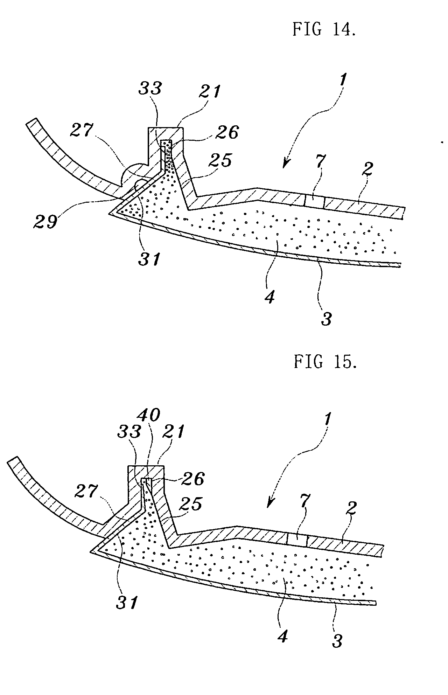

FIGS. 3 and 4 illustrate a joint structure for a partial foaming part of an instrument panel according to a first embodiment of the invention. FIGS. 5 and 9 illustrate a joint structure for a partial foaming part of an instrument panel according to a second to fifth embodiment of the invention. FIGS. 10 and 11 illustrate a joint structure for a partial foaming part of an instrument panel according to a sixth embodiment of the invention. FIGS. 12 and 13 illustrate a joint structure for a partial foaming part of an instrument panel according to a seventh embodiment of the invention. FIGS. 14 and 15 illustrate a joint structure for a partial foaming part of an instrument panel according to a eighth and ninth embodiment of the invention.

First, as previously mentioned in the explanation for a partial foaming part 1 of a common instrument panel 10, in conjunction with FIG. 2, when a polyurethane foam layer 4 is formed between a core layer 2 and a skin layer 3, a joining portion of the core layer 2 and the skin layer 3, i.e., the matching structure thereof affects most the leakage of the foaming liquid. The constitution and operation of the invention will be described, with reference to several preferred embodiments of the invention. In particular, the core portion of the invention, i.e., the joint structure of the core layer 2 and the skin layer 3 will be intensively treated with respect to each embodiment of the invention.

In addition, when the instrument panel 10 is fabricated using the partial foaming part 1, as shown in FIG. 2, the skin layer 3 is placed at the upper side and the core layer 2 is positioned at the lower side. In the case where the foaming of polyurethane is performed with the skin layer 3 and the core layer 2 mounted on a foaming die, the core layer 2 and the skin layer 3 are to be mounted on the foaming die. In the detailed description of the invention, therefore, the structure of the joining portion (joint structure) and the assembling procedures will be explained, referring to the state that the core layer 2 and the skin layer 3 are mounted on the foaming die.

FIGS. 3 and 4 illustrate a cross section of a joint structure for a partial foaming part 1 of the instrument panel 10 according to the first embodiment of the invention. FIG. 3(a) shows a cross section before the foaming die is closed, FIG. 3(b) shows a cross section after the foaming die is closed, and FIG. 4 illustrates a cross section of the partial foaming part 1 where a the polyurethane foam layer 4 is foamed.

As shown in FIG. 3(a), the joint structure of the partial foaming part 1 according to the first embodiment of the invention, the end portion of the core layer 2 to be mounted on an upper die 5, i.e., the portion corresponding to the joint of the core layer 2 and the skin layer 3 is provided with a recess 21 projected and bent upwardly inside thereof. The recess 21 has a guiding wall 22 for guiding the skin layer 3 and a pressing wall 23 formed substantially in a horizontal direction. The end portion of the skin layer 3 to be mounted on a lower die 5, i.e., the portion corresponding to the joint of the core layer 2 and the skin layer 3 is provided with a bent portion 31 primarily bent upwards so as to contact with the guiding wall 22 of the recess 21, and a resilient supporting portion 32 formed such that the end portion of the bent portion 31 is secondarily bent rearwards and resiliently supported on the underneath of the pressing wall 23.

After the core layer 2 and the skin layer 3 having the above joint structure are mounted respectively on the upper die 5 and the lower die 6, which constitute a foaming die, the foaming die is closed. At this time, as illustrated in FIG. 3(b) the bent portion 31 of the skin layer 3 is guided along the guiding wall 22 of the recess 21. Simultaneously, the resilient supporting portion 32 of the skin layer 3 is resiliently pressed downwardly by means of the pressing wall 23 of the recess 21. In this way, therefore, the bent portion 31 of the skin layer 3 also is in close contact with the guiding wall 22.

Therefore, at the same time when the foaming die is closed, a primary sealing force is effected between the pressing wall 23 of the recess 21 and the resilient supporting portion 32 of the skin layer 3. Also, owing to the primary sealing force, a secondary sealing force is exerted between the guiding wall 22 of the recess 21 and the bent portion 31 of the skin layer 3. In consequence, a strong sealing force is exerted between the core layer 2 and the skin layer 3.

At the above state, polyurethane foaming liquid is injected between the core layer 2 and the skin layer 3 and the foaming process is carried out. At this time, due to the strong sealing force that is exerted doubly between the core layer 2 and the skin layer 3, the foaming liquid flowing along the skin layer 3 towards the joining portion of the core layer 2 and the skin layer 3 is prevented from leaking outside. Simultaneously, when polyurethane is foamed, the contacting force being exerted between the pressing wall 23 and the resilient supporting portion 32 is further increased by the foaming pressure. Resultantly, as illustrated in FIG. 4, a partial foaming part 1 can be fabricated, without leakage of the polyurethane foaming liquid.

In addition, as clearly depicted in an enlarged view of FIG. 3(b), the guiding wall 22 formed inside the recess 21 may be formed in such a way so as to extend in a straight line to the pressing wall 23. Preferably, that portion of the core layer 2 corresponding to the joining portion of the guiding wall 22 and the pressing wall 23 is bent upwardly at a certain angle such that the bent portion can form a liquid trapping space 24 between the core layer 2 and the skin layer 3. Therefore, the liquid trapping space 24 functions to trap a foaming liquid, thereby enabling to more surely prevent leakage of the foaming liquid.

The liquid trapping space 24 functions to receive a tiny amount of foaming liquid, which leaks through the pressing wall 23 of the recess 21 and the leading resilient supporting portion 32 of the skin layer 3, and also noticeably reduce the leaking pressure of the foaming liquid. Consequently, the liquid trapping space 24 functions to secondarily block leakage of the foaming liquid, thereby further contributing to prevent the leakage of the foaming liquid. Also, that portion of the core layer 2 that corresponds to the rear side of the pressing wall 23 is preferred to be bent at a certain angle or formed in a round shape, so that, when the foaming die is closed, the resilient supporting portion 32 of the skin layer 3 can be easily inserted towards the pressing wall 23.

In addition, as illustrated in FIG. 5, according to the second embodiment of the invention a joint structure of a partial foaming part of an instrument panel is structured in the same manner as in the first embodiment, except that the guiding wall 22 and the pressing wall 23 of the recess 21 are constructed such that they can be in close contact with the bent portion 31 and the resilient supporting portion 32 of the skin layer 3, respectively. That is, the guiding wall 22 is in tightly contact with the bent portion 31 and the pressing wall 23 is in close contact with the resilient supporting portion 32.

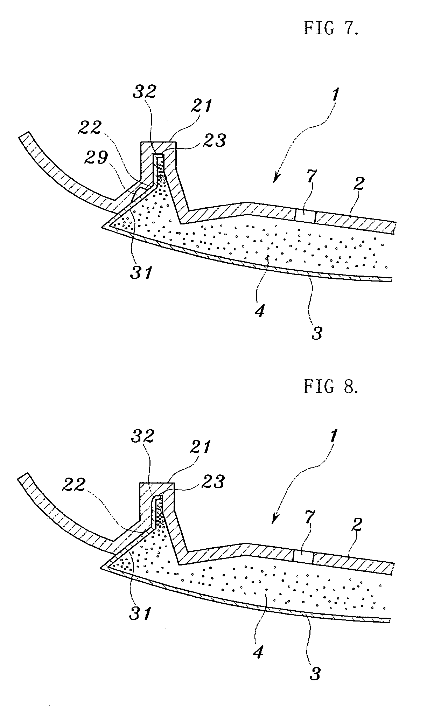

Further, as shown in FIG. 6 or 7, in a joint structure of a partial foaming part of an instrument panel according to the third embodiment of the invention, the guiding wall 22 and the pressing wall 23 of the recess 21 are configured such that they can be in close contact with the bent portion 31 and the resilient supporting portion 32 of the skin layer 3, respectively, similar to the second embodiment. However, a depressed groove 29 is formed in either the guiding wall 22 or the pressing wall 23 of the recess 21 such that a foaming liquid can be trapped in-between with the skin layer 3.

Here, FIG. 6 illustrates a wedge groove having a V-shape formed in the boundary portion between the pressing wall and the guiding wall, and FIG. 7 illustrates a depressed groove formed in one side of the middle of the guiding wall. The grooves serve as a liquid trapped space for trapping a polyurethane foaming liquid, as previously described.

In addition, as shown in FIG. 8 and similar to the second embodiment, a joint structure of a partial foaming part of an instrument panel according to the fourth embodiment of the invention is constructed in such a way that the guiding wall 22 and the pressing wall 23 of the recess 21 are in close contact with the bent portion 31 and the resilient supporting portion 32 of the skin layer 3, respectively. However, that portion of the skin layer 3 that corresponds to the joining portion of the guiding wall 22 and the pressing wall 23 is formed in a round shape. Because of this, the resilient supporting portion 32 of the skin layer can be easily inserted into the recess when the upper and lower die are mounted, and the sealing and contacting force between the skin layer and the core layer can be strengthened.

As illustrated in FIG. 9 and similar to the second embodiment, a joint structure of a partial foaming part of an instrument panel according to the fifth embodiment of the invention is constructed in such a way that the guiding wall 22 and the pressing wall 23 of the recess 21 are in close contact with the bent portion 31 and the resilient supporting portion 32 of the skin layer 3, respectively. However, an inner space 30 is formed in that portion of the skin layer 3 that corresponds to the joining portion of the guiding wall 22 and the pressing wall 23 so that a foaming liquid can be trapped in-between with the skin layer 3. In addition, the resilient supporting portion 32 of the skin layer is bent towards the inner space 30.

The fifth embodiment is configured so as to have a larger inner space separately, as compared with the liquid trapping space in the previous embodiments, in order to prevent the leaking of the foaming liquid. Furthermore, the resilient supporting portion is bent toward the inner space so that the buckling phenomenon of the bent portion can be delayed, thereby strengthening the joining force between the resilient supporting face and the pressing wall.

In addition, since the skin layer 3 of the first to fifth embodiment is formed of a relatively thin material, the leading resilient supporting portion 32 of the skin layer 3 can not be correctly inserted into the recess 21 when closing the foaming die. In preparation for that case, the core layer 2 is provided with a compressed air injection hole 7 for injecting a compressed air into the closed space formed between the core layer 2 and the skin layer 3 after the foaming die is closed.

The compressed air injection hole 7 is configured such that a compressed air can be injected through the upper die 5, on which the core layer 2 is mounted. By means of the pressure of the compressed air, the leading resilient supporting portion 32 of the skin layer 3 can be pressed with a greater certainty against the pressing wall 23 of the recess 21. In this way, therefore, the polyurethane foaming process through the foaming die can be carried out more easily and more accurately, thereby improving significantly the productivity of the partial foaming part 1 and the quality thereof.

FIGS. 10 and 11 illustrate a cross section of a joint structure for a partial foaming part 1 of the instrument panel 10 according to the sixth embodiment of the invention. FIG. 10(a) shows a cross section before the foaming die is closed, FIG. 10(b) shows a cross section after the foaming die is closed, and FIG. 11 illustrates a cross section of the partial foaming part 1 where a the polyurethane foam layer 4 is foamed.

As shown in FIG. 10(a), the joint structure of the partial foaming part 1 according to the sixth embodiment of the invention, the end portion of the core layer 2 to be mounted on an upper die 5, i.e., that portion corresponding to the joint of the core layer 2 and the skin layer 3 is provided with a recess 21 projected and bent upwardly inside thereof. The recess 21 has a side wall 25 for guiding the skin layer 3 and an inserting groove 26. The end portion of the skin layer 3 to be mounted on a lower die 5, i.e., the portion corresponding to the joint of the core,layer 2 and the skin layer 3 is provided with a bent portion 31 primarily bent upwards so as to be inserted into the side wall 25 of the recess 21, and an inserting end portion 33 formed such that the end portion of the bent portion 31 is secondarily bent frontward and inserted into the inserting groove 26.

The side wall 25 is formed in an inverted "V" shape such that the width D of its entrance is larger than the variable width θ of the bent portion 31 of the skin layer 3 and its width becomes gradually narrower towards the inserting groove 26. In the case where the end portion of the skin layer 3 having a relatively thin thickness is bent to form the bent portion 31, the bent portion 31 cannot be easily and accurately held at a desired angle. Therefore, the side wall 25 is structured as described above, i.e., the entrance width D of the side wall 25 is made to be larger than the expected variable width θ of the bent portion 31, so that the variation of the bent portion 31 can be compensated and simultaneously the inserting end portion 33 of the skin layer 3 can be more easily inserted into the inserting groove 26.

Here, the inserting end portion 33 is bent frontward from the bent portion 31 of the skin layer 3. Consequently, the end portion of the skin layer 3 having a relatively thin thickness is bent twice in two steps so that its structural strength can be improved. Furthermore, while minimizing the variable width θ of the bent portion 31, the wave phenomenon of the skin layer 3 can be prevented, which may occur for the time inserting the skin layer 3. At the same time, the inserting end portion 33 of the skin layer 3 is inserted into the inserting groove 26 of the recess 21 in the way of fitting, so that a strong bonding force can be produced in the inserting area, thereby enabling to more certainly prevent leakage of the polyurethane foaming liquid.

After the core layer 2 and the skin layer 3 having the above joint structure of the sixth embodiment are mounted respectively on the upper die 5 and the lower die 6, which constitute a foaming die, the foaming die is closed. At this time, as illustrated in FIG. 10(b) the bent portion 31 of the skin layer 3 is guided and inserted along the side wall 25 of the recess 21. Simultaneously, the inserting end portion 33 of the skin layer 3 is assembled in such a way to be inserted into the inserting groove 26, so that a strong sealing force is generated between the inserting groove 26 of the recess 21 and the inserting end portion 33 of the skin layer 3. Also, the inserting groove 26 and the inserting end portion 33 form a structure to the extent that the leakage of polyurethane foaming liquid cannot be occurred.

With the above described structure, polyurethane foaming liquid is injected between the core layer 2 and the skin layer 3 and the foaming process is carried out. At this time, the foaming liquid flowing along the skin layer 3 towards the joining portion of the core layer 2 and the skin layer 3 is prevented from leaking through the inserting groove 26 and the inserting end portion 33, due to the strong sealing force and the structure therebetween. Therefore, as illustrated in FIG. 11, a partial foaming part 1 can be fabricated without leakage of the polyurethane foaming liquid. As depicted more clearly in FIG. 10(b), that portion of the core layer 2 that corresponds to the right rearward of the side wall 25 is preferred to be bent upwardly at a certain predetermined angle. Therefore, the foaming liquid flowing along the skin layer 3 towards the joint portion of the core layer 2 and the skin 3 is guided naturally towards the lower side of the side wall 25, without directly flowing along the side wall 25.

In addition, similar to the first embodiment of the invention, preferably, a compressed air injection hole 7 for injecting a compressed air into the closed space, which is formed between the core layer 2 and the skin layer 3 when the foaming die is closed, is formed in the core layer 2. By doing this, the inserting end portion 33 of the skin layer 3 can be more accurately inserted though the inserting groove 26 of the recess. Consequently, the polyurethane foaming process through the foaming die can be performed more conveniently and accurately, thereby improving the productivity and quality of the partial foaming part 1.

FIGS. 12 and 13 illustrate a cross section of a joint structure for a partial foaming part 1 of the instrument panel 10 according to the seventh embodiment of the invention. FIG. 12(a) shows a cross section before the foaming die is closed, FIG. 12(b) shows a cross section after the foaming die is closed, and FIG. 13 illustrates a cross section of the partial foaming part 1 where a the polyurethane foam layer 4 is foamed.

The join structure of the partial foaming part 1 of the instrument panel 10 according to the seventh embodiment of the invention is substantially the same as in the sixth embodiment, except that a bent wall 27 is formed in a connecting face between the side wall 25 and the inserting groove 26 formed inside the recess 21. The bent wall 27 is constructed in such a manner that a liquid trapping space 24' for trapping polyurethane foaming liquid can be formed between the bent wall 27 and the bent portion 31 of the skin layer 3.

As described in connection with the first embodiment of the invention, the liquid trapping space 24' functions to receive a tiny amount of foaming liquid, which leaks through the inserting groove 26 of the recess 21 and the inserting end portion 33 of the skin layer 3, thereby noticeably reducing the leaking pressure of the foaming liquid. Consequently, the liquid trapping space 24' serves as a secondary blockage to the leakage of foaming liquid, thereby further contributing to prevent the leakage of the foaming liquid.

In addition, as illustrated in FIG. 14, a joint structure of a partial foaming part of the instrument according to the eighth embodiment of the invention is constructed in such a way that a depressed groove 29 is formed in one side face of side wall 25 of the recess 21, so that a foaming liquid can be trapped between the core layer 2 and the skin layer 3.

Finally, in the case of the sixth and seventh embodiments of the invention, as the inserting groove 26 is formed narrower, the inserting groove 26 and the inserting end portion 33 of the skin layer 3 can form a more effective structure for the prevention of leakage. In contrast, if the inserting groove 26 is formed overly narrow, the injection mould forming the core layer 2 is to have a projected shape so that the strength of the foaming die is lowered at the position of the inserting groove 26.

Therefore, as illustrated in FIG. 15, a joint structure of a partial foaming part according to the ninth embodiment of the invention is configured in such a way that a plurality of ribs 40 is attached to the inner face of the inserting groove 26 along the longitudinal direction thereof.

FIG. 15 is a cross-section of the joint structure of the ninth embodiment where the attached rib is illustrated. Preferably, the width of the opening portion is formed so as to be slightly wide, and at the same time the rib of the inserting groove 26 to be formed by a die is structured such that its width can become gradually wider towards the inner side of the inserting groove 26, thereby narrowing the width of the inserting groove 26.

As described above, according to the joint structure of a partial foaming part of an instrument panel, when a foaming die is closed after the core layer and the skin layer are mounted on the die, the skin layer can be easily inserted into a recess formed in the core layer. The inserted end portion of the skin layer can be resiliently supported inside the recess, or its end portion can be inserted and fitted through a narrow groove of the recess. Therefore, the joining of a core layer and a skin layer is formed of a complicated sealing structure to the extent that leakage of the foaming liquid can be completely blocked, while easily performing the foaming process of polyurethane using a foaming die. Accordingly, the post-treating work due to leakage of the foaming liquid can be minimized, thereby significantly improving the productivity of the partial foaming part, and the quality of produced partial foaming part.

Furthermore, in the case where the liquid trapping space for trapping the polyurethane foaming liquid is formed additionally in the joint structure of the core layer and the skin layer according to the invention, the polyurethane foaming liquid can be more completely prevented from leaking, due to the liquid trapping space along with the joint structure of the invention. When the compressed air injection hole is formed in the core layer such that a compressed air can be injected after the foaming die is closed, the joint structure of the core layer and the skin layer according to the invention can be reproduced thoroughly as they are designed. Therefore, the polyurethane foaming process through a foaming die can be carried out more easily and accurately, and thus a greater contribution can be made in increasing the productivity of the partial foaming part and improving the quality thereof.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A joint structure of a core layer and a skin layer for manufacturing a partial foaming part having a polyurethane foam layer formed between the core layer and the skin layer, wherein:
a) a recess formed on the core layer includes at the inside thereof a guiding wall and a pressing wall and
b) a bent portion being bent upwardly so as to contact with the guiding wall and a resilient supporting portion being resiliently supported by the pressing wall are formed in the end portion of the skin layer to be inserted inside the recess.

2. The joint structure according to claim 1, wherein a liquid trapping space is formed between the joining of the guiding wall and the pressing wall of the recess and the resilient supporting portion of the skin layer.

3. The joint structure according to claim 1, wherein the bent portion and the resilient supporting portion of the skin layer are in tightly contact with the guiding wall and the pressing wall of the recess, respectively.

4. The joint structure according to claim 3, wherein a depressed groove is formed in either the guiding wall or the pressing wall of the recess such that a liquid is trapped in-between with the skin layer.

5. The joint structure according to claim 3, wherein the joining portion between the guiding wall and the pressing wall of the recess is formed in a round shape.

6. The joint structure according to claim 3, wherein an inner space is formed in the joining portion between the guiding wall and the pressing wall of the recess, and the resilient supporting portion is bent towards of the inner space.

7. The joint structure according to claim 1 or 6, wherein the core layer is provided with a compressed air injection hole formed therein for injecting a compressed air into the closed space formed between the core layer and the skin layer after a foaming die is closed.

8. A joint structure of a core layer and a skin layer for manufacturing a partial foaming part having a polyurethane foam layer formed between the core layer and the skin layer, wherein:
a) a recess formed on the core layer includes at the inside thereof a side wall having an entrance and an inserting groove; and
b) a bent portion and an inserting end portion formed at the leading end of the bend portion are formed in the end portion of the skin layer to be inserted inside the recess, and the bent portion is bent upwardly so as to be inserted into the side wall.

9. The joint structure according to claim 8, wherein the side wall is formed in such a manner that the width D of its entrance is larger than the variable width θ of the bent portion of the skin layer and then gradually becomes narrower towards the inserting groove.

10. The joint structure according to claim 8, wherein a bent wall is formed in a connecting face between the side wall and the inserting groove, and a liquid trapping space is formed between the bent wall and the bent portion of the skin layer.

11. The joint structure according to claim 8, wherein the bent portion and the recess of the skin layer are in tightly contact with the side wall and the inserting groove of the recess, respectively.

12. The joint structure according to claim 8, wherein at least one rib is formed in one side face of the inserting groove of the recess.

13. The joint structure according to claim 8, wherein a depressed groove is formed in one side face of the side wall of the recess such that a liquid is trapped between the core layer and the skin layer.

14. The joint structure according to claim 8 or 12, wherein the core layer is provided with a compressed air injection hole formed therein for injecting a compressed air into the closed space formed between the core layer and the skin layer after a foaming die is closed.
